# EUROPEAN PATENT SPECIFICATION

(11) **EP 1 534 023 B1**
(45) Date of publication and mention of the grant of the patent: **21.06.2006**
(21) Application number: 03292906.9
(22) Date of filing: 24.11.2003
(51) Int. Cl.: H04Q 7/22

(54) **A method for displaying of content**
Verfahren zur Anzeige von Inhalt
Procédé d'affichage de contenu

(43) Date of publication of application: 25.05.2005
(73) Proprietor: ALCATEL, 75008 Paris (FR)
(72) Inventor: Carrez, Francois, 94320 Thiais (FR); Lestable, Thierry, 75015 Paris (FR)
(74) Representative: Rausch, Gabriele

(56) References cited:
- EP-A- 0 971 303
- EP-A- 1 158 820
- GB-A- 2 370 149

## Description

### Field of the invention

The present invention relates to the field of displaying of content, and more particularly without limitation, to displaying of advertisements.

### Background and prior art

Electronic display boards, in particular light emitting diodes (LED) display boards are used for various purposes, such as for outdoor advertising, shopping malls, stadiums, and live events.

LED display boards, which are also referred to as outdoor electronic billboards, are capable of performing like a real outdoor television, even under direct sunlight. LED display boards are animated, giant, outdoor advertising video screens which grab peoples attention on a busy street, whether pedestrians or inside a car or a bus, stuck in the traffic jam. Other applications of LED display boards include large stadium video and score board displays, side line banner displays, information, news, exchange rate, time and temperature displays etc.

Usually an LED display board has a controller which serves as the LED boards 'brain'. The controller is a computer which is installed nearby the LED board. The computer may supply text, graphics, animations, scanned images and video clips for display on the LED board. Alternatively a video-in source is coupled to the controller, such as a DVD, CDV, VCR, live video, television or cable television video-in source. Such LED display boards are commercially available from Electromedia (http)://www.1-billboards-advertising.com/billboard.html) and others.

US Patent No. 5,933,811 and US Patent No. 6,385,592 disclose a system and method for delivering customised electronic advertisements in an interactive communication system. The customised advertisements are selected based on consumer profiles and are then integrated with offerings maintained by various content providers. Whenever a consumer directs one of the consumer computers to access an offering existing in one of the content provider computers, an advertising request is sent to the advertisement provider computer.

It is a common disadvantage of most prior art LED display boards that there is no interaction with the viewers regarding selection of content, and therefore no directly targeted advertising.

EP 1 158 820 A1 discloses a targeted information display which detects the presence of passers-by with the help of transmissions made from mobile communication devices carried by such persons. The document suggests to check for interest indicators of the passers-by, and to display content on a display in dependence of the interest indicators of the passer-by.

### Summary of the invention

The present invention provides for a method of displaying of content on a display, such as a LED display board, in particular for outdoor usage. The active user equipments, e.g. mobile phones, wireless personal digital assistants (PDA) and/or other wireless mobile computing or communication devices of a given wireless telecommunication network, within the proximity of the display are determined. The user profiles assigned to users of the active user equipments within the proximity of the display are accessed and content is selected depending on the user profiles.

In accordance with a preferred embodiment of the invention the display is located within a radio cell or in close proximity to a radio cell of the wireless telecommunication network. The active user equipments within that radio cell are considered to be in the proximity of the display and the user profiles of the corresponding users are used for the selection of the content. Examples for such wireless telecommunication networks include GSM, UMTS, CDMA, IEEE802.11 networks. In this instance the user profile information can be retrieved from a corresponding server computer.

In accordance with a further preferred embodiment of the invention the geographical position of the user equipments is provided by location based services of a radio access network, such as a mobile cellular telecommunication network. In the case of a cellular network the cell-ID, mobile location information (MLI), location area identifier (LAI) or the routing area identifier provide geographical position data. In case of a wireless area network (LAN) the SSID or the AP's MAC address or any other AP identifier, provides such geographical position data. Based on the location information of the active user equipments a determination is made which ones of the active user equipments are within the proximity of the display.

In accordance with a preferred embodiment of the invention a location-enabling GSM or UMTS network is used as a radio access network. Such a network contains serving mobile location centres (SMLCs) which serve to precisely determine the geographical position of active user equipments. For example Alcatel's intelligent location service (iMLS) can be used for location-based services, and in particular for determining the actual geographical positions of user equipments and providing the actual geographical positions to the user equipments. Another suitable commercially available product is Alcatel 8602 location server/gateway mobile location centre (GMLC) which also enables the positioning of active end user equipments. Based on such location based services the active user equipments within the field of vision covered by the display are determined.

Alternatively or in addition the display itself has a radio interface for direct communication with the active user equipments within its proximity. The controller of the display receives user profile information from the active user equipments within the proximity of the display via that radio interface. In this instance the user profile information is available on the individual user equipments and no database access to a central database is required. This embodiment is especially useful if bi-band mobile phones are used such as mobile phones supporting both the Bluetooth and GSM; or IEEE802.11 and GSM standards. Preferably the radio interface of the display is a short range interface, e.g. in accordance with the Bluetooth or IEEE802.11 standards.

In accordance with a further preferred embodiment of the invention different categories of contents are displayed in a time sequence in proportion to the distribution of the user interests as indicated by the user profile information. Alternatively or in addition multiple content is shown at the same time on the display. For this purpose a picture-in-picture or picture-outside-picture mode can be used in order to show two or more windows with different contents on the display.

Many modem television sets have two tuners for receiving two different television signals at the same time. Such television sets include the ability to display a small auxiliary image in addition to a larger main image for simultaneous display of the two television programmes. The smaller auxiliary image may be displayed within the boundaries of the larger main picture, in which case, such a television system is termed a picture-in-picture (PIP) system, or the smaller auxiliary image may be located outside (e.g. to the left or right side of the main image), in which case the system is termed a picture-outside-picture (POP) system. Such PIP and POP television systems are known from US Patent No. 4,623,915, US Patent No. 5,598,222, US Patent No. 5,237,246, US Patent No. 6,008,860, US Patent No. 6,307,597 and European Patent Application No. 0550911A1.

In order to enable simultaneous display of multiple content the display of the invention can be operated in PIP and/or POP mode.

In accordance with a further preferred embodiment of the invention an advertising metrics is used to generate a point value which is indicative of the commercial value of the advertisement which has been shown on the LED display board. For example the advertisement metrics can be based on the duration of an advertisement and the number of active user equipments having matching interest profiles. A corresponding point value is transmitted to a billing server for corresponding billing of an advertiser.

In accordance with a preferred embodiment of the invention the content is selected from a content server on the basis of the user profile information. The content is then transmitted to the controller of the display which renders the content on the display.

### Brief description of the drawings

In the following preferred embodiments of the invention will be explained in greater detail by making reference to the drawings in which:
- Figure 1: is a block diagram of a first embodiment of a display system,
- Figure 2: is a flow chart being illustrative of an embodiment of a method of the invention,
- Figure 3: is a block diagram of a second preferred embodiment of a display system.

### Detailed description

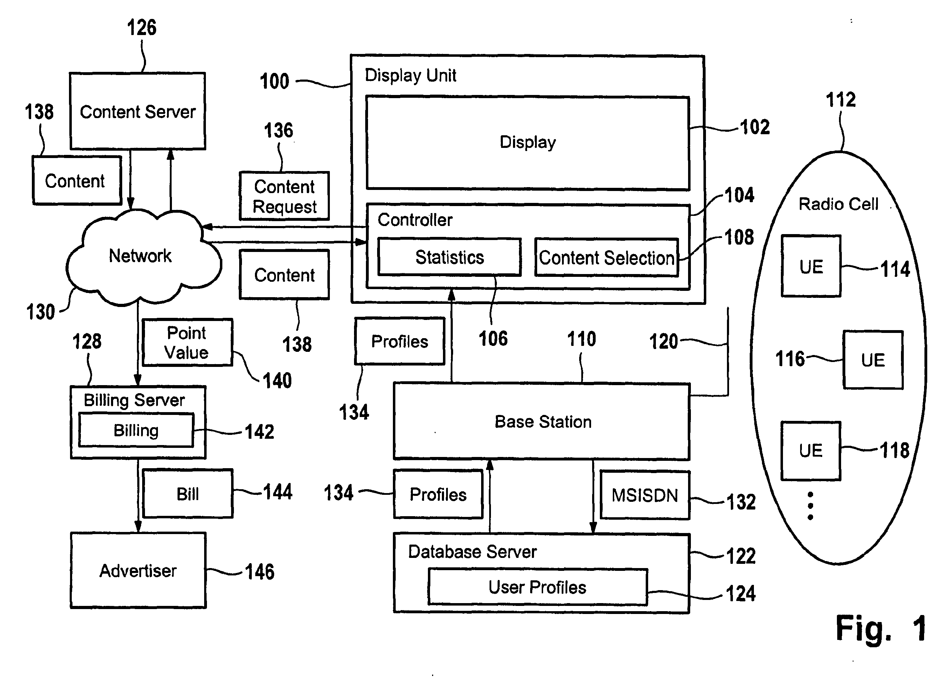

Figure 1 shows display unit 100 which has display 102. For example display 102 is an LED display board for outside usage, in particular for outdoor advertising in shopping malls, stadiums and/or during live events. Display unit 100 has controller 104. Controller 104 can be implemented by a personal computer which is coupled to display 102. Controller 104 has program module 106 for performing a statistical evaluation of user profile information. Further controller 104 has program module 108 for performing content selection based on the statistical evaluation performed by program module 106.

Base station 110 provides radio coverage for radio cell 112. A number of active user equipments (UE) 114, 116, 118, ... are located within radio cell 112. The active user equipments 114, 116, 118, ... are known to base station 110 as the active user equipments are registered with the wireless telecommunication network to which radio cell 112 belongs.

Antenna 120 is coupled to base station 110 in order to provide an air interface for coverage of radio cell 112. Antenna 120 is located in close proximity to display 102.

Base station 110 is coupled both to controller 104 of display unit 100 and to database server 122. Database server 122 stores database 124 which contains user profiles of user equipments.

Controller 104 of display unit 100 is coupled to content server 126 and to billing server 128 via network 130. For example network 130 is the Internet.

In operation user equipments 114, 116, 118, ... are switched on and registered in the wireless telecommunication network by means of base station 110. For example the registration procedure is performed on the basis of the mobile subscriber identification numbers (MSISDN) of the user equipments.

Base station 110 transmits the MSISDNs 132 of the active user equipments 114, 116, 118, ... of radio cell 112 to database server 122. In response database server 122 performs a database query of database 124 in order to access the respective user profiles being assigned to the active user equipments 114, 116, 118, ... of radio cell 112. Corresponding user profile information 134 is provided from database server 122 to base station 110 from where it is forwarded to controller 104 of display unit 100. Alternatively user profile information 134 is directly provided from database server 122 to controller 104.

User profile information 134 is evaluated by means of program module 106. Program module 106 performs a statistic evaluation of the user profile information 134. For example program module 106 determines the percentages of users being interested in various categories, such as sports, culture, politics, news, gardening, cars and/or other kinds of products or activities.

The respective percentages being indicative of the distribution of the users interests are provided from program module 106 to program module 108. In response program module 108 sends content request 136 to content server 126 for selection of content corresponding to the distribution of the users interests.

In response to content request 136 content server 126 delivers content 138 to controller 104. Controller 104 renders content 138 on display 102. This can be done sequentially, i.e. only one category of content is rendered at a given point of time on display 102. Preferably controller 104 allocates a display time to each content category in proportion to the distribution of the users interests.

Alternatively or in addition display 102 is split into a number of windows in a PIP or POP mode. The size of the individual windows is chosen by controller 104 in proportion to the distribution of the users interests. For example if 90% of the users are interested in sports in accordance with user profile information 134 but only 5% are interested in politics and 5% in the weather report, three windows are shown on display 102, i.e. a large window covering 90% of the surface of display 102 for displaying of sports related information and/or sport related advertisement and two small windows each covering 5% of display 102 for displaying of politics and weather related information, respectively.

Controller 104 implements an advertisement metrics in order to calculate a point value which is indicative of the commercial value of the advertisement which has been rendered on display 102. For example the point value is calculated based on the number of active user equipments within radio cell 112 which have user profiles that match the rendered advertisements. This point value 114 is communicated from time to time from controller 104 to billing server 128. Billing server 128 has program module 142 which generates bill 144 which is sent to advertiser 146.

The display system of figure 1 is particularly useful for targeted advertisement. For example display 102 and antenna 120 are located in close proximity within a shopping mall. Hence the surroundings of display 102 are covered by radio cell 112 in which users are located which may already view display 102 or may potentially pass by display 102. Based on the user profile information 134 which is obtained from the corresponding active user equipments within radio cell 112 advertisement content can be selected in a targeted way and rendered on display 102.

Alternatively display unit 100 has an RF interface for direct wireless communication with the active user equipments within the proximity of display 102. Preferably the RF interface is a short range RF interface. In this instance display unit 100 directly receives user profile information from the active user equipments which are located within the reach of the short range RF radio interface.

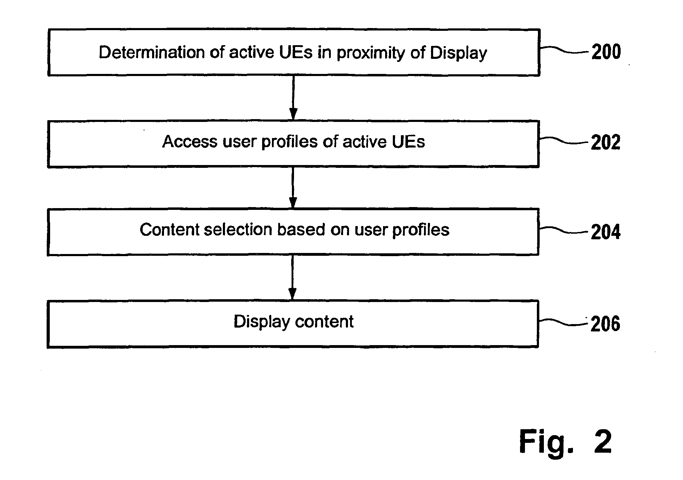

Figure 2 shows a corresponding flow chart. In step 200 the active user equipments in the proximity of the display are determined. This can be done either through the intermediary of a cellular wireless telecommunication network or by direct radio frequency communication between the display unit and the user equipments within its proximity.

In step 202 the user profiles of the active user equipments determined in step 200 are provided to the display unit. This can be implemented by accessing a database server in order to perform a database query for the user profiles. Alternatively the user profiles are transmitted directly form the active user equipment to the display unit.

In step 204 a content selection is performed based on the user profile information. The content may be selected locally from the controller of the display unit or from another local content source and/or from a remote content server. In step 206 the selected content is displayed.

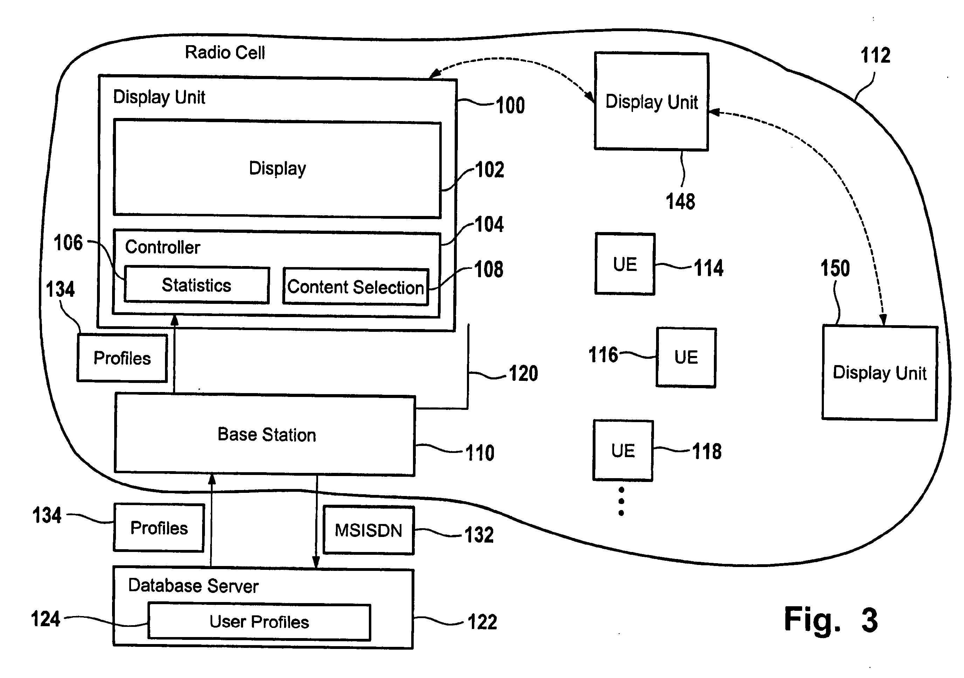

Figure 3 shows another preferred embodiment of a display system. Elements of the display system of figure 3 which correspond to elements of the display system of figure 1 are designated by the same reference numerals.

Display system depicted in figure 3 has additional display units 148 and 150. The display units 100, 148 and 150 are coupled by means of a so called ad-hoc network. This way information can be interchanged between display units 100, 148 and 150. Like display unit 100 the additional display units 148 and 150 are located within the coverage of radio cell 112. For example radio cell 112 covers a football stadium and display units 100, 148, 150, ... are located at various places within the football stadium. In the example considered here controller 104 of display unit 100 acts as a master, i.e. controller 104 determines the content to be rendered on the display units 100, 148, 150, ... of the ad-hoc network.

### List of Reference Numerals

- 100: display unit
- 102: display
- 104: controller
- 106: program module
- 108: program module
- 110: base station
- 112: radio cell
- 114: user equipment
- 116: user equipment
- 118: user equipment
- 120: antenna
- 122: database sensor
- 124: database
- 126: content server
- 128: billing server
- 130: network
- 132: MSISDN
- 134: user profile information
- 136: content request
- 138: content
- 140: point value
- 142: program module
- 144: bill
- 146: advertiser
- 148: display
- 150: display unit

## Claims

1. A method of displaying of content on a display, the method comprising:
a) determining at least one active user equipment (114, 116, 118) of a wireless telecommunication network being located in the proximity of the display (102, 148),
b) selecting content (138) depending on a user profile being assigned to a user of the at least one active user equipment (114, 116, 118),
c) displaying the content on the display (102, 148),
**characterized in that**
a statistic evaluation of the user profile information (134) is carried out, and that a display time is allocated to each content category in proportion to the distribution of the user interests.

2. The method of claim 1, wherein the determination of the at least one active user equipment is performed by a base station (110) providing coverage for a radio cell (112) in which the at least one active user equipment is (114, 116, 118) located, the display (102, 148) being located within or in the proximity of the radio cell (112).

3. The method of claim 1, the display (102, 148) having a short range radio interface, and wherein the determination of the at least one active user equipment (114, 116, 118) is performed by means of the short range radio interface, the range of the short range radio interface covering the field of view of the display (102, 148).

4. The method of claim 1, further comprising providing a picture-in-picture and/or picture-outside-picture display mode for concurrent display of various content.

5. A computer program product comprising code means adapted to perform the steps of :
a) entering of user profile information (134) being related to at least one active user equipment (114, 116, 118) of a wireless telecommunication network, the at least one active user equipment being located in the proximity of a display (102, 148),
b) carrying out a statistic evaluation of the user profile information (134),
c) allocating a display time to each content category in proportion to the distribution of the user interests.
d) performing a content selection depending on steps b) and c),
e) rendering of the selected content.

6. The computer program product of claim 5 further comprising code means adapted to perform the steps of requesting of the selected content from a content server (126) via a network.

7. The computer program product of claim 5, further comprising code means adapted to perform the steps of providing an advertisement metrics.

8. A display system comprising:
a) display means (102),
b) means (104) for receiving of user profile information (134) being related to active user equipments (114, 116, 118,...) of a wireless telecommunication network located in the proximity of the display means,
c) means (106, 108) for selection of content depending on the user profile information (134),
**characterized in that**
the selection means are adapted to carry out a statistic evaluation of the user profile information (134) and to allocate a display time to each content category in proportion to the distribution of the user interests.

9. The display system of claim 8, the means for receiving being adapted to be coupled to a base station (110) of the wireless telecommunication network providing coverage for a radio cell (112) in which the active user equipments are located, the display means being adapted to be located within or in the proximity of the radio cell.

10. The display system of claim 8, further comprising a radio interface for receiving of the user profile information (134) from the active user equipments (114, 116, 118).

## Patentansprüche

1. Verfahren zum Anzeigen von Inhalt auf einer Anzeige, wobei das Verfahren umfaßt:
a) das Bestimmen mindestens eines aktiven Teilnehmergerätes (114, 116, 118) eines Funktelekommunikationsnetzes, das in der Nähe der Anzeige (102, 148) angeordnet ist,
b) das Auswählen des Inhalts (138) in Abhängigkeit von einem Benutzerprofil, das einem Benutzer des mindestens einen aktiven Teilnehmergerätes (114, 116, 118) zuzuordnen ist,
c) das Anzeigen des Inhalts auf der Anzeige (102, 148),
**dadurch gekennzeichnet, daß**
eine statistische Auswertung der Benutzerprofilinformationen (134) durchgeführt wird, und daß eine Anzeigezeit jeder Inhaltkategorie im Verhältnis zu der Verteilung der Benutzerinteressen zugeordnet wird.

2. Verfahren nach Anspruch 1, in welchem die Bestimmung des mindestens einen aktiven Teilnehmergerätes durch eine Basisstation (110) durchgeführt wird, die die Versorgung für eine Funkzelle (112) bereitstellt, in welcher sich mindestens ein aktives Teilnehmergerät (114, 116, 118) befindet, wobei die Anzeige (102, 148) in oder in der Nähe der Funkzelle (112) anzuordnen ist.

3. Verfahren nach Anspruch 1, wobei die Anzeige (102, 148) eine Nahbereichs-Funkschnittstelle aufweist, und in welchem die Bestimmung des mindestens einen aktiven Teilnehmergerätes (114, 116, 118) mittels der Nahbereichs-Funkschnittstelle durchgeführt wird, wobei der Bereich der Nahbereichs-Funkschnittstelle das Blickfeld der Anzeige (102, 148) abdeckt.

4. Verfahren nach Anspruch 1, außerdem umfassend das Bereitstellen eines Bild-in-Bild- und/oder Bild-außerhalb-Bild-Anzeigemodus für die gleichzeitige Anzeige von verschiedenem Inhalt.

5. Computerprogrammprodukt, das Codevorrichtungen umfaßt, die zum Ausführen der Schritte angepaßt sind:
a) Eingeben von Benutzerprofilinformationen (134), die sich auf mindestens ein aktives Teilnehmergerät (114, 116, 118) eines Funktelekommunikationsnetzes beziehen, wobei sich mindestens ein aktives Teilnehmergerät in der Nähe einer Anzeige (102, 148) befindet,
b) Durchführen einer statistischen Auswertung der Benutzerprofilinformationen (134),
c) Zuordnen einer Anzeigezeit zu jeder Inhaltkategorie im Verhältnis zu der Verteilung der Benutzerinteressen,
d) Durchführen einer Inhaltauswahl in Abhängigkeit von Schritt b) und c),
e) Wiedergeben des ausgewählten Inhalts.

6. Computerprogrammprodukt nach Anspruch 5 außerdem umfassend Codevorrichtungen, die angepaßt sind, um den Schritt des Anforderns des ausgewählten Inhalts von einem Inhaltserver (126) über ein Netz durchzuführen.

7. Computerprogrammprodukt nach Anspruch 5, außerdem umfassend Codevorrichtungen, die angepaßt sind, um den Schritt des Bereitstellens einer Werbungsmetrik durchzuführen.

8. Anzeigesystem, umfassend:
a) Anzeigevorrichtungen (102),
b) Vorrichtungen (104) zum Empfangen von Benutzerprofilinformationen (134), die sich auf aktive Teilnehmergeräte (114, 116, 118,...) eines Funktelekommunikationsnetzes beziehen, das sich in der Nähe der Anzeigevorrichtungen befindet,
c) Vorrichtungen (106, 108) zur Auswahl des Inhalts in Abhängigkeit von den Benutzerprofilinformationen (134),
**dadurch gekennzeichnet, daß**
die Auswahlvorrichtungen angepaßt sind, um eine statistische Auswertung der Benutzerprofilinformationen (134) durchzuführen und um eine Anzeigezeit zu jeder Inhaltkategorie im Verhältnis zu der Verteilung der Benutzerinteressen zuzuordnen.

9. Anzeigesystem nach Anspruch 8, wobei die Vorrichtungen zum Empfangen angepaßt werden, um mit einer Basisstation (110) des Funktelekommunikationsnetzes verbunden zu werden, das die Versorgung für eine Funkzelle (112) bereitstellt, in welcher sich die aktiven Teilnehmergeräte befinden, wobei die Anzeigevorrichtungen angepaßt werden, um sich in oder in der Nähe der Funkzelle zu befinden.

10. Anzeigesystem nach Anspruch 8, außerdem umfassend eine Funkschnittstelle zum Empfangen der Benutzerprofilinformationen (134) von den aktiven Teilnehmergeräten (114, 116, 118).

## Revendications

1. Procédé d'affichage de contenu sur un écran, le procédé comprenant :
a) la détermination d'au moins un équipement actif de l'utilisateur (114, 116, 118) d'un réseau de télécommunication sans fil situé dans le voisinage de l'écran (102, 148),
b) la sélection du contenu (138) selon un profil d'utilisateur affecté à un utilisateur d'au moins un équipement actif de l'utilisateur (114, 116, 1 18),
c) l'affichage du contenu sur l'écran (102, 148),
**caractérisé en ce que**
une évaluation statistique des informations de profil d'utilisateur (134) est effectuée, et **en ce qu'**un temps d'affichage est alloué à chaque catégorie de contenu proportionnellement à la répartition des intérêts de l'utilisateur.

2. Procédé selon la revendication 1, dans lequel la détermination d'au moins un équipement actif de l'utilisateur est effectuée par une station de base (110) fournissant la couverture pour une cellule radio (112) dans laquelle est situé au moins un équipement actif de l'utilisateur (114, 116, 118), l'écran (102, 148) étant situé à l'intérieur ou dans le voisinage de la cellule radio (112).

3. Procédé selon la revendication 1, l'écran (102, 148) ayant une interface radio à courte portée, et dans lequel la détermination d'au moins un équipement actif de l'utilisateur (114, 116, 118) est effectuée au moyen de l'interface radio à courte portée, la portée de l'interface radio à courte portée couvrant le champ de l'écran (102, 148).

4. Procédé selon la revendication 1, comprenant en outre la fourniture d'un mode d'affichage par incrustation d'image et/ou par superposition d'image pour l'affichage simultané de divers contenus.

5. Produit de programme informatique comprenant des moyens de codage adaptés pour effectuer les étapes de :
a) entrée des informations de profil d'utilisateur (134) concernant au moins un équipement actif de l'utilisateur (114, 116, 118) d'un réseau de télécommunication sans fil, au moins un équipement actif de l'utilisateur situé dans le voisinage d'un écran (102, 148),
b) réalisation d'une évaluation statistique des informations de profil d'utilisateur (134),
c) allocation d'un temps d'affichage à chaque catégorie de contenu proportionnellement à la répartition des intérêts de l'utilisateur,
d) réalisation d'une sélection de contenu selon les étapes b) et c),
e) présentation du contenu sélectionné.

6. Produit de programme informatique selon la revendication 5, comprend en outre des moyens de codage adaptés pour effectuer la demande du contenu sélectionné depuis un serveur de contenu (126) via un réseau.

7. Produit de programme informatique selon la revendication 5, comprenant en outre des moyens de codage adaptés pour effectuer l'étape de fourniture d'une métrique publicitaire.

8. Système d'affichage comprenant :
a) des moyens d'affichage (102),
b) des moyens (104) de réception des informations de profil d'utilisateur (134) concernant les équipements actifs de l'utilisateur (114, 116, 118,.....) d'un réseau de télécommunication sans fil situé dans le voisinage des moyens d'affichage,
c) des moyens (106, 108) de sélection du contenu en fonction des informations de profil d'utilisateur (134),
**caractérisé en ce que**
les moyens de sélection sont adaptés pour effectuer une évaluation statistique des informations de profil d'utilisateur (134) et allouer un temps d'affichage à chaque catégorie de contenu proportionnellement à la répartition des intérêts de l'utilisateur.

9. Système d'affichage selon la revendication 8, les moyens de réception étant adaptés pour coupler une station de base (110) du réseau de télécommunication sans fil fournissant la couverture pour une cellule radio (112) dans lequel les équipements actifs de l'utilisateur sont situés, les moyens d'affichage étant adaptés pour être situés à l'intérieur ou dans le voisinage de la cellule radio.

10. Système d'affichage selon la revendication 8, comprenant en outre une interface radio pour recevoir les informations de profil d'utilisateur (134) des équipements actifs de l'utilisateur (114, 116, 118).
